# EUROPÄISCHE PATENTSCHRIFT

(11) **EP 3 715 983 B1**
(45) Veröffentlichungstag und Bekanntmachung des Hinweises auf die Patenterteilung: **29.06.2022**
(21) Anmeldenummer: 19165782.4
(22) Anmeldetag: 28.03.2019
(51) Int. Cl.: G05B 19/418, G06F 9/455

(54) **VERFAHREN ZUR BEREITSTELLUNG VON STEUERUNGSANWENDUNGEN ÜBER EIN KOMMUNIKATIONSNETZ ZUR ÜBERMITTLUNG ZEITKRITISCHER DATEN UND KOORDINIERUNGSEINRICHTUNG**
METHOD FOR PROVIDING CONTROL APPLICATIONS OVER A COMMUNICATIONS NETWORK FOR TRANSMITTING TIME-CRITICAL DATA AND COORDINATION DEVICE
PROCÉDÉ DE FOURNITURE DES APPLICATIONS DE COMMANDE À L'AIDE D'UN RÉSEAU DE COMMUNICATION DESTINÉ À LA TRANSMISSION DES DONNÉES TEMPORELLEMENT CRITIQUES ET DISPOSITIF DE COORDINATION

(43) Veröffentlichungstag der Anmeldung: 30.09.2020
(73) Patentinhaber: Siemens Aktiengesellschaft, 80333 München (DE)
(72) Erfinder: Albrecht, Harald, 90475 Nürnberg (DE); Höme, Stephan, 91126 Schwabach (DE); Rziha, Martin, 90513 Zirndorf (DE); Talanis, Thomas, 91336 Heroldsbach (DE)

(56) Entgegenhaltungen:
- US-A1- 2017 300 353
- AHMED NASRALLAH ET AL: "Ultra-Low Latency (ULL) Networks: The IEEE TSN and IETF DetNet Standards and Related 5G ULL Research", ARXIV.ORG, CORNELL UNIVERSITY LIBRARY, 201 OLIN LIBRARY CORNELL UNIVERSITY ITHACA, NY 14853, 20. März 2018 (2018-03-20), XP081196057, DOI: 10.1109/COMST.2018.2869350

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus EP 2 324 601 B1 ist ein Verfahren zum Übertragen von Datenpaketen in einem Kommunikationsnetz bekannt, bei dem erste Datenpakete mit einer niedrigen Priorität zwischen einem Sender und einem Empfänger des Kommunikationsnetzes übertragen werden. Zweite Datenpakete mit einer hohen Priorität werden gegenüber den ersten Datenpaketen bevorzugt zwischen dem Sender und dem Empfänger übertragen. Bei einem von dem Sender an den Empfänger zu übertragenden zweiten Datenpaket wird überprüft, ob gegenwärtig ein erstes Datenpaket übertragen wird. Wenn die Überprüfung, ob gegenwärtig ein erstes Datenpaket übertragen wird, positiv ist, wird die Übertragung des ersten Datenpakets abgebrochen oder unterbrochen, und das zweite Datenpaket wird im Anschluss daran übertragen. Nach der Übertragung des zweiten Datenpakets wird die Übertragung des nicht übertragenen ersten Datenpakets wiederholt oder des Rests des unvollständig übertragenen ersten Datenpakets veranlasst. Jedes erste Datenpaket wird parallel zu einem Sendevorgang in einem Zwischenspeicher gespeichert und erst nach einer vollständigen Übertragung des ersten Datenpakets an den Empfänger aus dem Zwischenspeicher gelöscht.

In EP 2 538 619 B1 ist ein Verfahren zur Übertragung von Datenpaketen mit mehreren Datenframes in einem Ethernet-Automatisierungsnetzwerk beschrieben, bei dem nach einem Empfang eines ersten Datenpakets mit einer ersten Priorität durch einen Sender ein Start eines Sendevorgangs des ersten Datenpakets vom Sender zu einem Empfänger erfolgt. Bei einem Empfang eines an den Empfänger zu übertragenden zweiten Datenpakets mit einer zweiten Priorität, die höher als die erste Priorität ist, erfolgt ein Abbruch des Sendevorgangs des ersten Datenpakets innerhalb eines der Datenframes des ersten Datenpakets, der sich zu dem Zeitpunkt des Empfangs des zweiten Datenpakets im Sendevorgang befindet. Danach wird das zweite Datenpaket vom Sender zum Empfänger übertragen.

In der älteren internationalen Patentanmeldung WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressoucenreservierung vorgenommen.

Entsprechend EP 3 618 384 B1 werden zur Simulation einer Verarbeitung von Reservierungsanfragen für Multicast-Datenströme in Kommunikationsnetzen hinsichtlich ihres Verhaltens zu simulierende Kommunikationsgeräte jeweils funktional in eine als Control Plane bezeichnete Kommunikationssteuerungsebene sowie in eine als Data Plane bezeichnete Datenübermittlungsebene unterteilt. Für der Control Plane zugeordnete Funktionen der Kommunikationsgeräte werden jeweils Simulationssystem-Komponenten bereitgestellt, die durch in einer Ablaufsteuerungsumgebung ausführbare Software-Container gebildet werden. Netzinfrastrukturgeräte werden auf der Data Plane durch mittels der Netzinfrastrukturgeräte jeweils bereitgestellte Ressourcen modelliert. Die den Kommunikationsgeräten zugeordneten Software-Container werden entsprechend einer vorgegebenen Topologie selektiv in der Ablaufsteuerungsumgebung ausgeführt und dort miteinander gekoppelt.

Aus der älteren europäischen Patentanmeldung mit dem Anmeldeaktenzeichen EP 3 664 510 A1 ist ein Übermittlungsverfahren für Datenpakete zu einer Datensenke bekannt, bei dem in einem ersten Schritt von einer Datenquelle über eine erste drahtlose Schnittstelle der Datenquelle eine Anforderung zur Einrichtung eines ersten Streams ausgesendet wird. Die erste Anforderung wird von einem ersten Empfänger empfangen und über erste Knoten an die Datensenke weitergeleitet. Aufgrund der ersten Anforderung wird ein erster Pfad für den ersten Stream eingerichtet, der von der Datenquelle über den ersten Empfänger und die ersten Knoten zur Datensenke führt, und dem ersten Stream eine erste Streamidentifikation zugeordnet. Dem ersten Empfänger und den ersten Knoten werden zur Übermittlung der Datenpakete Ressourcen reserviert.

In einem zweiten Schritt des aus EP 3 664 510 A1 bekannten Übermittlungsverfahrens wird zumindest ein Teil der Datenpakete von der Datenquelle an den ersten Empfänger gesendet und von dem ersten Empfänger über die ersten Knoten an die Datensenke weitergeleitet. Die von der Datenquelle an den ersten Empfänger gesendeten Datenpakete enthalten die erste Streamidentifikation. In einem während der Ausführung des zweiten Schrittes ausgeführten dritten Schritt wird von der Datenquelle über eine zweite drahtlose Schnittstelle der Datenquelle eine zweite Anforderung zur Einrichtung eines zweiten Streams ausgesendet. Die zweite Anforderung wird von einem zweiten Empfänger empfangen und über zweite Knoten an die Datensenke weitergeleitet. Aufgrund der zweiten Anforderung wird ein zweiter Pfad für den zweiten Stream eingerichtet, der von der Datenquelle über den zweiten Empfänger und die zweiten Knoten zur Datensenke führt, und dem zweiten Stream eine zweite Streamidentifikation zugeordnet. Dabei ist die zweite Streamidentifikation mit der ersten Streamidentifikation identisch. Von dem zweiten Empfänger und den zweiten Knoten werden zur Übermittlung der Datenpakete Ressourcen reserviert. In einem während der Ausführung des zweiten Schrittes ausgeführten vierten Schritt wird zumindest ein Teil der Datenpakete von der Datenquelle an den zweiten Empfänger gesendet und von dem zweiten Empfänger über die zweiten Knoten an die Datensenke weitergeleitet.

Aus US 2017/300353 A1 ist ein Verfahren zur Kommunikation in einem Cloud-basierten Kommunikationsnetz bekannt, bei dem ein SDN-Controller (Software Defined Networking) eine Pfadreservierungsanfrage von einer Policy Management-Einheit empfängt. Die Pfadreservierungsanfrage umfasst Adressen von mehrere Netzknoten, die mit der Policy Management-Einheit verbunden sind, sowie Bandbreiten- und Quality of Service-Anforderungen für einen Pfad zwischen den Netzknoten. Der SDN-Controller reserviert in einer zugeordneten Kommunikationsnetz-Ressource den Pfad, der sowohl Bandbreiten- als auch Quality of Service-Anforderungen erfüllt und die Netzknoten miteinander verbindet. Abschließend sendet der SDN-Controller eine Nachricht mit Informationen über den ermittelten Pfad an ein weiterleitendes Kommunikationsgerät eines Transitnetzes, das die Netzknoten miteinander verbindet.

In "Ultra-Low Latency (ULL) Networks: The IEEE TSN and IETF DetNet Standards and Related 5G ULL Research", Ahmed Nasrallah et al., Cornell University Library, 201 Olin Library, Cornell University Ithaca, NY 14853, 20. März 2018 ist ein Überblick über IEEE TSN- und IETF DetNet-Standards und damit verbundenen Forschungsstudien dargestellt. Insbesondere werden dort Konzepte zur Synchronisation, zum Management und zur Steuerung von Datenflüssen (Flows) in Zugangs-, Backhaul- und Core-Netzen von 5G-Kommunikationssystemen behandelt.

Steuerungsanwendungen, insbesondere Industrie- oder Automatisierungsapplikationen, werden zunehmend mittels Virtualisierungslösungen bereitgestellt und laufen vorzugsweise in gekapselten virtuellen Maschinen ab. Virtuelle Maschinen sind grundsätzlich unabhängig von physikalischer Hardware lauffähig. Insbesondere können virtuelle Maschinen zunächst auf einem ausgewählten Hypervisor-Host gestartet und während ihres Betriebs im Rahmen einer Migration auf einen anderen Hypervisor-Host innerhalb eines Rechner-Clusters verschoben werden. Eine solche Migration kann beispielsweise durch einen Lastausgleich (Load Balancing) innerhalb des Rechner-Clusters motiviert sein.

Bei einer Migration einer virtuellen Maschine auf einen anderen Hypervisor-Host geht häufig mit einer Netzwerk-Topologieänderung einher. Aufgrund dessen können sich durch eine Migration nachteilige Auswirkungen für virtualisierte Steuerungsanwendungen hinsichtlich Konnektivität oder Dienst-Qualität ergeben, insbesondere wenn für Datenströme pfadgranulare Dienstgüte-Garantien gegeben oder Netzwerk-Ressourcen reserviert werden. Entsprechende Probleme könnten grundsätzlich durch einen Ausschluss einer Bereitstellung von Steuerungsanwendungen mittels Virtualisierungslösungen, durch einen Ausschluss von virtualisierten Steuerungsanwendungen von einem Load Balancing oder durch eine manuell angestoßene Migration gelöst werden.

Der vorliegenden Erfindung liegt die Aufgabe zugrunde, ein Verfahren zur Bereitstellung von Steuerungsanwendungen über ein Kommunikationsnetz zur Übermittlung zeitkritischer Daten schaffen, das sowohl eine effiziente Ausschöpfung zur Verfügung stehender Systemressourcen als auch zuverlässige Aufrechterhaltung bestehender Kommunikationsbeziehungen ermöglicht, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch eine Koordinierungseinrichtung mit den in Anspruch 15 angegebenen Merkmalen gelöst. Vorteilhafte Weiterbildungen sind in den abhängigen Ansprüchen angegeben.

Entsprechend dem erfindungsgemäßen Verfahren zur Bereitstellung von Steuerungsanwendungen über ein Kommunikationsnetz zur Übermittlung zeitkritischer Daten werden die Steuerungsanwendungen durch Server-Einrichtungen über das Kommunikationsnetz zur Nutzung an Endgeräten bereitgestellt. Die Steuerungsanwendungen werden jeweils mittels Ablaufsteuerungskomponenten bereitgestellt, die in mittels der Server-Einrichtungen gebildete Ablaufsteuerungsumgebungen ladbar und dort ausführbar sind. Dabei sind die Ablaufsteuerungskomponenten auf jeweils andere Server-Einrichtungen zur dortigen Ausführung migrierbar.

Darüber hinaus werden ausgewählte Datagramme Datenströmen zugeordnet und zwischen den Server-Einrichtungen und den Endgeräten über zumindest die Server-Einrichtungen und die Endgeräte umfassende Pfade des Kommunikationsnetzes übermittelt. Zur Reservierung von Ressourcen spezifizieren die Server-Einrichtungen bzw. die Endgeräte, die durch weiterleitende Kommunikationsgeräte entlang der Pfade für eine Übermittlung der Datenströme bereitzustellen sind, Dienstgüteparameter für die Datenströme. Bei einer Reservierungsanfrage überprüfen die weiterleitenden Kommunikationsgeräte bzw. überprüft eine übergeordnete Kommunikationssteuerungseinrichtung jeweils, ob im jeweiligen weiterleitenden Kommunikationsgerät ausreichende Ressourcen zur Datenübermittlung unter Einhaltung der spezifizierten Dienstgüteparameter verfügbar sind. Die weiterleitenden Kommunikationsgeräte werden bei ausreichenden Ressourcen entlang der Pfade jeweils zur Ressourcen-Bereitstellung für die Datenströme konfiguriert. Die durch die weiterleitenden Kommunikationsgeräte bereitzustellenden Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges.

Vor einer Migration einer Ablaufsteuerungskomponente einer Steuerungsanwendung auf eine jeweils ausgewählte Server-Einrichtung überprüft eine Koordinierungseinrichtung erfindungsgemäß, ob für die jeweilige Steuerungsanwendung zuvor ein Datenstrom zur Übermittlung von Anwendungsdaten eingerichtet ist. Falls kein Datenstrom eingerichtet ist, gibt die Koordinierungseinrichtung die Migration der jeweiligen Ablaufsteuerungskomponente frei. Dagegen überprüft die Koordinierungseinrichtung bei einem zuvor eingerichteten Datenstrom, ob für Pfade zur ausgewählten Server-Einrichtung ausreichende Ressourcen zur Datenübermittlung unter Einhaltung der spezifizierten Dienstgüteparameter verfügbar sind. Falls keine ausreichenden Ressourcen verfügbar sind, unterbindet die Koordinierungseinrichtung die Migration der jeweiligen Ablaufsteuerungskomponente. Bei ausreichenden Ressourcen veranlasst die Koordinierungseinrichtung eine Einrichtung eines Datenstroms zur ausgewählten Server-Einrichtung sowie einen Abbau des zuvor eingerichteten Datenstroms und gibt die Migration der jeweiligen Ablaufsteuerungskomponente zur ausgewählten Server-Einrichtung frei.

Mit dem erfindungsgemäßen Verfahren kann sichergestellt werden, dass erforderliche bzw. bisher reservierte Netzwerk-Ressourcen bei einer Migration einer Steuerungsanwendung auf einen anderen bzw. neuen Hypervisor-Host auch dort zur Verfügung stehen. Auf diese Weise kann vermieden werden, dass nach einer Migration ein ungewollter Konnektivitätsverlust eintritt. Insbesondere kann Loadbalancing damit auch für Steuerungsanwendungen genutzt werden, um Host-Hardware optimiert auszulasten und verfügbar zu machen.

Vorzugsweise sind die weiterleitenden Kommunikationsgeräte über ein Time-sensitive Network, insbesondere entsprechend IEEE 802.1Q, IEEE 802.1AB, IEEE 802.1AS, IEEE 802.1BA und/oder IEEE 802.1CB, miteinander verbunden. Eine Weiterleitung der ausgewählten Datagramme kann beispielsweise mittels Frame Preemption, insbesondere gemäß IEEE 802.1Qbu, mittels Time-Aware Shaper, insbesondere gemäß IEEE 802.1Qbv, mittels Credit-Based Shaper, insbesondere gemäß IEEE 802.1Qav, mittels Burst Limiting Shaper, Peristaltic Shaper bzw. Priority-Based Shaper gesteuert werden. Vorteilhafterweise werden die Datenströme auf Reservierungsanfragen jeweils bidirektional eingerichtet, wobei die Endgeräte Kommunikations- bzw. Automatisierungsgeräte sind. Insgesamt können mit obigen Ausgestaltungen auch Steuerungsanwendungen mit Echtzeit-Anforderungen unterstützt werden.

Entsprechend einer bevorzugten Ausgestaltung der vorliegenden Erfindung spezifizieren die Server-Einrichtungen bzw. die Endgeräte für eine Reservierungsanfrage jeweils einen Datenstrom-Identifikator. Dabei wird bei ausreichenden Ressourcen jeweils eine dem spezifizierten Datenstrom-Identifikator zugeordnete Multicast-Adresse an eine jeweilige Server-Einrichtung bzw. an ein jeweiliges Endgerät übermittelt. Die Server-Einrichtungen bzw. die Endgeräte können die Dienstgüteparameter für die Datenströme beispielsweise jeweils mittels einer Talker Advertise-Nachricht spezifizieren. In entsprechender Weise können die Server-Einrichtungen bzw. die Endgeräte die Datenstrom-Identifikatoren jeweils mittels einer Listener Ready-Nachricht spezifizieren. Den Server-Einrichtungen können jeweils eine Talker- oder eine Listener-Funktion oder beide Funktionen zugeordnet sein. Vorzugsweise werden die Reservierungsanfragen entsprechend IEEE 802.1Qcc behandelt. Auf diese Weise kann eine zuverlässige und performante Implementierung der vorliegenden Erfindung gewährleistet werden.

Die Pfade für die Datenströme werden entsprechend einer vorteilhaften Ausgestaltung der vorliegenden Erfindung mittels Shortest Path Bridging entsprechend IEEE 802.1aq ermittelt. Darüber hinaus können die weiterleitenden Kommunikationsgeräte zur Pfadermittlung beispielsweise untereinander Topologieinformationen, insbesondere entsprechend IS-IS-Protokoll (Intermediate System to Intermediate System), austauschen.

Vorzugsweise werden die Ablaufsteuerungsumgebungen jeweils mittels eines auf einer Server-Einrichtung installierten Hypervisors gebildet. Eine Migration einer Ablaufsteuerungskomponente einer Steuerungsanwendung wird insbesondere jeweils durch eine Load-Balancing-Einrichtung initiiert. Darüber hinaus können die Pfade für die Datenströme auch virtuelle Switches umfassen. Damit können durch die vorliegende Erfindung grundsätzlich beliebige Virtualisierungs- und Migrationsszenarien abgedeckt werden.

Im Rahmen einer Migration kann die Koordinierungseinrichtung den Abbau des zuvor eingerichteten Datenstroms sowie die Einrichtung des Datenstroms zur ausgewählten Server-Einrichtung bei ausreichenden Ressourcen selbst vornehmen. Alternativ hierzu kann die Koordinierungseinrichtung im Rahmen einer Migration die jeweilige Steuerungsanwendung bei ausreichenden Ressourcen entsprechend benachrichtigen. In diesem Fall nimmt die jeweilige Steuerungsanwendung die Einrichtung des Datenstroms zur ausgewählten Server-Einrichtung sowie den Abbau des zuvor eingerichteten Datenstroms vor.

Die erfindungsgemäße Koordinierungseinrichtung ist zur Durchführung eines Verfahrens entsprechend vorangehenden Ausführungen vorgesehen und dazu ausgestaltet und eingerichtet, vor einer Migration einer Ablaufsteuerungskomponente einer Steuerungsanwendung auf eine jeweils ausgewählte Server-Einrichtung zu überprüfen, ob für die jeweilige Steuerungsanwendung zuvor ein Datenstrom zur Übermittlung von Anwendungsdaten eingerichtet ist. Außerdem ist die Koordinierungseinrichtung dazu ausgestaltet und eingerichtet, die Migration der jeweiligen Ablaufsteuerungskomponente freizugeben, falls kein Datenstrom eingerichtet ist, und bei einem zuvor eingerichteten Datenstrom zu überprüfen, ob für Pfade zur ausgewählten Server-Einrichtung ausreichende Ressourcen zur Datenübermittlung unter Einhaltung zuvor spezifizierter Dienstgüteparameter verfügbar sind.

Erfindungsgemäß ist die Koordinierungseinrichtung dazu ausgestaltet und eingerichtet, die Migration der jeweiligen Ablaufsteuerungskomponente zu unterbinden, falls keine ausreichenden Ressourcen verfügbar sind, und bei ausreichenden Ressourcen eine Einrichtung eines Datenstroms zur ausgewählten Server-Einrichtung sowie einen Abbau des zuvor eingerichteten Datenstroms zu veranlassen und die Migration der jeweiligen Ablaufsteuerungskomponente zur ausgewählten Server-Einrichtung freizugeben.

Die vorliegende Erfindung wird nachfolgend an einem Ausführungsbeispiel anhand der Zeichnung näher erläutert. Es zeigt
- Figur 1: ein mehrere Kommunikations- und Automatisierungsgeräte umfassendes industrielles Automatisierungssystem mit virtualisierten Steuerungsanwendungen,
- Figur 2: ein Ablaufdiagramm zur Bereitstellung von virtualisierten Steuerungsanwendungen über ein Kommunikationsnetz zur Übermittlung zeitkritischer Daten.

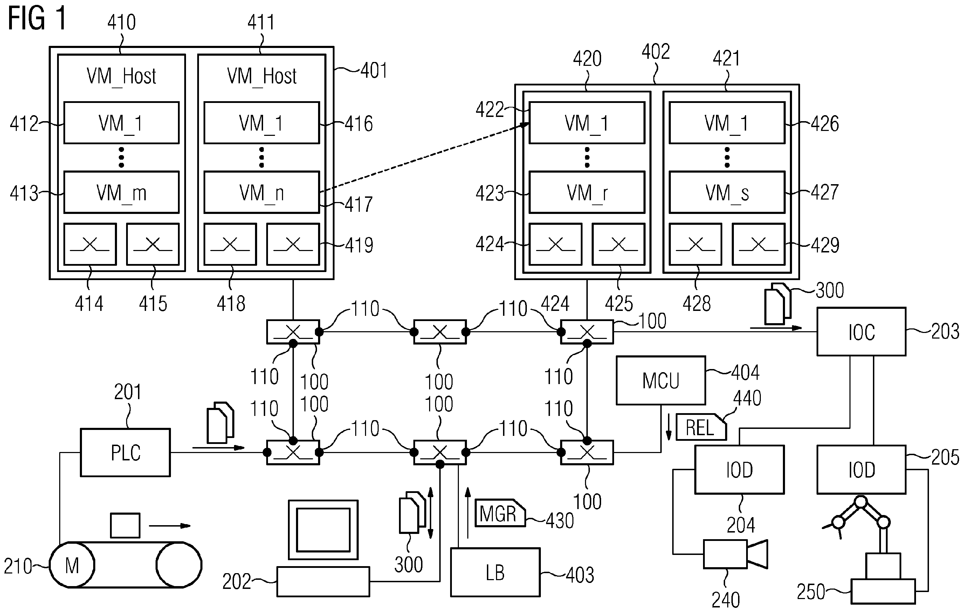

Das in Figur 1 dargestellte industrielle Automatisierungssystem umfasst ein Kommunikationsnetz zur Übermittlung zeitkritischer Daten mit mehreren Bridges oder Switches 100 als Datagramme weiterleitenden Kommunikationsgeräten. Bridges bzw. Switches 100 umfassen jeweils mehrere Ports 110 sowie einen Backplane-Switch als Koppelelement und dienen insbesondere zum Anschluss von speicherprogrammierbaren Steuerungen 201, Bedien- und Beobachtungsstationen 202, I/O-Controllern 203 oder I/O-Modulen 204-205, die ebenfalls Kommunikationsgeräte bzw. Kommunikationsendgeräte darstellen. Im vorliegenden Ausführungsbeispiel ist das Kommunikationsnetz als Time-Sensitive Network ausgestaltet, insbesondere entsprechend IEEE 802.1Q, IEEE 802.1AB, IEEE 802.1AS, IEEE 802.1BA bzw. IEEE 802.1CB. Eine Weiterleitung von Datenrahmen (Frames) im Kommunikationsnetz kann vorteilhafterweise mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper bzw. Priority-Based Shaper gesteuert werden. Darüber hinaus sind vorzugsweise für jeden Port 110 eines sendenden bzw. weiterleitenden Kommunikationsgeräts 100, 201-205 mehrere Sendewarteschlangen (Queues) vorgesehen.

Speicherprogrammierbare Steuerungen 201 umfassen typischerweise jeweils ein Kommunikationsmodul, eine Zentraleinheit sowie zumindest eine Eingabe/Ausgabe-Einheit. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201 mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 210. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind beispielsweise über ein Rückwandbus-System miteinander verbunden.

Auch die I/O-Module 204-205 sind zum Austausch von Steuerungs- und Messgrößen mit angeschlossenen Maschinen oder Vorrichtungen 240, 250 vorgesehen. Zur Steuerung der I/O-Module 204-205 ist beispielsweise pro Automatisierungszelle ein zugeordneter I/O-Controller 203 vorgesehen. Die I/O-Module 204-205 können grundsätzlich auch durch eine entfernte speicherprogrammierbaren Steuerung 201 angesteuert werden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Darüber hinaus umfasst das in Figur 1 dargestellte industrielle Automatisierungssystem mehrere Server-Cluster 401, 402 mit jeweils mehreren Servern 410-411, 420-421, die als Hosts für virtuelle Maschinen 412-413, 416-417, 422-423, 426-427 und virtuelle Switches 414-415, 418-419, 424-425, 428-429 genutzt werden. Insbesondere werden durch die Server 410-411, 420-421 mittels der virtuellen Maschinen 412-413, 416-417, 422-423, 426-427 virtualisierte Steuerungsanwendungen über das Kommunikationsnetz zur Nutzung an Endgeräten bereitgestellt. Zu Endgeräten zählen beispielsweise sind beispielsweise die Kommunikations- bzw. Automatisierungsgeräte 201-205. Mit den Steuerungsanwendungen werden vorzugsweise Überwachungs-, Steuerungs- oder Analysefunktion für die Kommunikations- bzw. Automatisierungsgeräte 201-205 verfügbar gemacht.

Die Steuerungsanwendungen werden jeweils mittels Ablaufsteuerungskomponenten bereitgestellt, die in mittels der virtuellen Maschinen 412-413, 416-417, 422-423, 426-427 gebildete Ablaufsteuerungsumgebungen ladbar und dort ausführbar sind. Die Ablaufsteuerungsumgebungen werden vorzugsweise jeweils mittels eines auf einem Server 410-411, 420-421 installierten Hypervisors gebildet. Somit können sind die Ablaufsteuerungskomponenten auf jeweils andere Server zur dortigen Ausführung migriert werden. Eine Migration einer Ablaufsteuerungskomponente einer Steuerungsanwendung wird beispielsweise durch eine Load-Balancing-Einrichtung 403 initiiert, die entweder als separate Einheit realisiert oder in ein Server-Cluster 401, 402 integriert sein kann.

Im Rahmen einer Übermittlung von zeitkritischen, den virtualisierten Steuerungsanwendungen zugeordneten Daten werden ausgewählte Datenrahmen (Frames) 300 Datenströmen zugeordnet und zwischen den virtuellen Maschinen 412-413, 416-417, 422-423, 426-427 und den Kommunikations- bzw. Automatisierungsgeräten 201-205 über zumindest die virtuellen Maschinen 412-413, 416-417, 422-423, 426-427 und die Kommunikations- bzw. Automatisierungsgeräte 201-205 umfassende Pfade des Kommunikationsnetzes übermittelt. Diese Pfade können mittels Shortest Path Bridging entsprechend IEEE 802.1aq ermittelt werden und insbesondere die virtuellen Switches 414-415, 418-419, 424-425, 428-429 umfassen. Vorzugsweise tauschen die Bridges bzw. Switches 100 zur Pfadermittlung untereinander Topologieinformationen entsprechend IS-IS-Protokoll (Intermediate System to Intermediate System) aus.

Zur Reservierung von Ressourcen, die durch die Bridges bzw. Switches 100 entlang der Pfade für die Übermittlung der Datenströme bereitzustellen sind, spezifizieren die virtuellen Maschinen 412-413, 416-417, 422-423, 426-427 bzw. die Kommunikations- bzw. Automatisierungsgeräte 201-205 Dienstgüteparameter für die Datenströme. Entsprechend einem dezentralen Stream-Reservierungsmodell überprüfen die Bridges bzw. Switches 100 jeweils, ob im jeweiligen weiterleitenden Kommunikationsgerät ausreichende Ressourcen zur Datenübermittlung unter Einhaltung der spezifizierten Dienstgüteparameter verfügbar sind. Alternativ hierzu kann eine Überprüfung einer Verfügbarkeit ausreichender Ressourcen entsprechend einem zentralen Stream-Reservierungsmodell durch eine übergeordnete Kommunikationssteuerungseinrichtung erfolgen.

Sowohl entsprechend einem dezentralen Stream-Reservierungsmodell als auch entsprechend einem zentralen Stream-Reservierungsmodell werden die Bridges bzw. Switches 100 bei ausreichenden Ressourcen entlang der Pfade jeweils zur Ressourcen-Bereitstellung für die Datenströme konfiguriert. Die durch die Bridges bzw. Switches 100 bereitzustellenden Ressourcen umfassen insbesondere nutzbare Übertragungszeitfenster, Bandbreite, zugesicherte maximale Latenz, Queue-Anzahl, Queue-Cache bzw. Adress-Cache in den Bridges bzw. Switches. Vorzugsweise werden die Datenströme auf Reservierungsanfragen jeweils bidirektional eingerichtet.

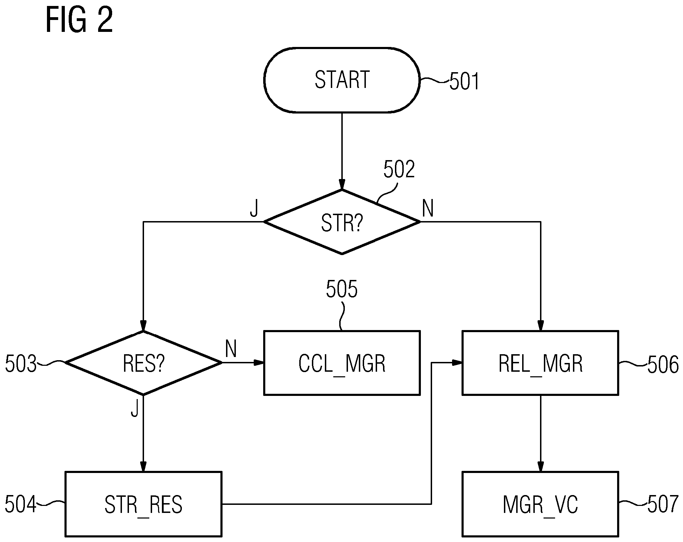

Im vorliegenden Ausführungsbeispiel übermittelt die Load-Balancing-Einrichtung 403 zur Initiierung einer Migration einer Steuerungsanwendung von einem bisher genutzten Server 411 auf einen ausgewählten anderen Server 420 entsprechend Schritt 501 des in Figur 2 dargestellten Ablaufdiagramms eine Anforderung 430 an eine Koordinierungseinrichtung 404. Diese Koordinierungseinrichtung 404 kann entweder als separate Einheit realisiert oder in ein Server-Cluster 401, 402 integriert sein. Nach Empfang der Anforderung 430 überprüft die Koordinierungseinrichtung 404 entsprechend Schritt 502 vor einer Migration einer Ablaufsteuerungskomponente der Steuerungsanwendung auf den ausgewählten Server 420, ob für die jeweilige Steuerungsanwendung zuvor ein Datenstrom zur Übermittlung von Anwendungsdaten eingerichtet worden ist.

Falls kein Datenstrom eingerichtet ist, gibt die Koordinierungseinrichtung 404 die Migration der jeweiligen Ablaufsteuerungskomponente entsprechend Schritt 506 frei und übermittelt eine Rückmeldung 440 mit einer Freigabe an die Load-Balancing-Einrichtung 403. Anschließend migriert die Load-Balancing-Einrichtung 403 die Ablaufsteuerungskomponente der Steuerungsanwendung auf den ausgewählten Server 420 (Schritt 507) .

Bei einem zuvor eingerichteten Datenstrom überprüft die Koordinierungseinrichtung 404 entsprechend Schritt 503, ob für Pfade zur ausgewählten Server-Einrichtung 420 ausreichende Ressourcen zur Datenübermittlung unter Einhaltung der spezifizierten Dienstgüteparameter verfügbar sind. Falls keine ausreichenden Ressourcen verfügbar sind, unterbindet die Koordinierungseinrichtung 404 die Migration der jeweiligen Ablaufsteuerungskomponente (Schritt 505) und übermittelt eine Rückmeldung 440 mit einer Ablehnung der Migration an die Load-Balancing-Einrichtung 403. Dagegen veranlasst die Koordinierungseinrichtung bei ausreichenden Ressourcen entsprechend Schritt 504 eine Einrichtung eines Datenstroms zum ausgewählten Server 420 sowie einen Abbau des zuvor eingerichteten Datenstroms.

Im Rahmen einer Migration kann die Koordinierungseinrichtung 404 die Einrichtung des Datenstroms zum ausgewählten Server 420 sowie den Abbau des zuvor eingerichteten Datenstroms bei ausreichenden Ressourcen grundsätzlich selbst vornehmen. Alternativ hierzu kann die Koordinierungseinrichtung im Rahmen einer Migration die jeweilige Steuerungsanwendung bei ausreichenden Ressourcen entsprechend benachrichtigen, damit die jeweilige Steuerungsanwendung die Einrichtung des Datenstroms zum ausgewählten Server 420 sowie den Abbau des zuvor eingerichteten Datenstroms vornimmt. Nach erfolgreicher Einrichtung des Datenstroms zum ausgewählten Server 420 gibt die Koordinierungseinrichtung 404 die Migration der jeweiligen Ablaufsteuerungskomponente entsprechend Schritt 506 frei und übermittelt eine Rückmeldung 440 mit einer Freigabe an die Load-Balancing-Einrichtung 403. Anschließend migriert die Load-Balancing-Einrichtung 403 die Ablaufsteuerungskomponente der Steuerungsanwendung auf den ausgewählten Server 420 (Schritt 507).

Im vorliegenden Ausführungsbeispiel werden die Reservierungsanfragen entsprechend IEEE 802.1Qcc behandelt. Dabei kann den virtuellen Maschinen 412-413, 416-417, 422-423, 426-427 jeweils eine Talker- bzw. Listener-Funktion zugeordnet sein. Insbesondere spezifizieren die virtuellen Maschinen 412-413, 416-417, 422-423, 426-427 oder die Kommunikations- bzw. Automatisierungsgeräte 201-205 für eine Reservierungsanfrage jeweils einen Datenstrom-Identifikator. Bei ausreichenden Ressourcen wird jeweils eine dem spezifizierten Datenstrom-Identifikator zugeordnete Multicast-Adresse an eine jeweilige virtuelle Maschine 412-413, 416-417, 422-423, 426-427 oder an ein jeweiliges Kommunikations- bzw. Automatisierungsgerät 201-205 übermittelt. Vorzugsweise spezifizieren die virtuellen Maschinen 412-413, 416-417, 422-423, 426-427 oder die Kommunikations- bzw. Automatisierungsgeräte 201-205 die Dienstgüteparameter für die Datenströme jeweils mittels einer Talker Advertise-Nachricht. In entsprechender Weise werden die Datenstrom-Identifikatoren jeweils mittels einer Listener Ready-Nachricht spezifiziert.

## Patentansprüche

1. Verfahren zur Bereitstellung von Steuerungsanwendungen über ein Kommunikationsnetz zur Übermittlung zeitkritischer Daten, bei dem
- die Steuerungsanwendungen durch Server-Einrichtungen (410-411, 420-421) über das Kommunikationsnetz zur Nutzung an Endgeräten (201-205) bereitgestellt werden,
- die Steuerungsanwendungen jeweils mittels Ablaufsteuerungskomponenten bereitgestellt werden, die in mittels der Server-Einrichtungen (410-411, 420-421) gebildete Ablaufsteuerungsumgebungen ladbar und dort ausführbar sind, wobei die Ablaufsteuerungskomponenten auf jeweils andere Server-Einrichtungen zur dortigen Ausführung migrierbar sind,
- ausgewählte Datagramme (300) Datenströmen zugeordnet und zwischen den Server-Einrichtungen (410-411, 420-421) und den Endgeräten (201-205) über zumindest die Server-Einrichtungen und die Endgeräte umfassende Pfade des Kommunikationsnetzes übermittelt werden,
- die Server-Einrichtungen (410-411, 420-421) und/oder die Endgeräte (201-205) zur Reservierung von Ressourcen, die durch weiterleitende Kommunikationsgeräte (100) entlang der Pfade für eine Übermittlung der Datenströme bereitzustellen sind, Dienstgüteparameter für die Datenströme spezifizieren,
- die weiterleitenden Kommunikationsgeräte (100) und/oder eine übergeordnete Kommunikationssteuerungseinrichtung bei einer Reservierungsanfrage jeweils überprüfen/überprüft, ob im jeweiligen weiterleitenden Kommunikationsgerät ausreichende Ressourcen zur Datenübermittlung unter Einhaltung der spezifizierten Dienstgüteparameter verfügbar sind,
- die weiterleitenden Kommunikationsgeräte (100) bei ausreichenden Ressourcen entlang der Pfade jeweils zur Ressourcen-Bereitstellung für die Datenströme konfiguriert werden,
- eine Koordinierungseinrichtung (404) vor einer Migration einer Ablaufsteuerungskomponente einer Steuerungsanwendung auf eine jeweils ausgewählte Server-Einrichtung (420) überprüft, ob für die jeweilige Steuerungsanwendung zuvor ein Datenstrom zur Übermittlung von Anwendungsdaten eingerichtet ist,
- die Koordinierungseinrichtung (404) die Migration der jeweiligen Ablaufsteuerungskomponente freigibt, falls kein Datenstrom eingerichtet ist,
- die Koordinierungseinrichtung (404) bei einem zuvor eingerichteten Datenstrom überprüft, ob für Pfade zur ausgewählten Server-Einrichtung (420) ausreichende Ressourcen zur Datenübermittlung unter Einhaltung der spezifizierten Dienstgüteparameter verfügbar sind,
- die Koordinierungseinrichtung (404) die Migration der jeweiligen Ablaufsteuerungskomponente unterbindet, falls keine ausreichenden Ressourcen verfügbar sind,
- die Koordinierungseinrichtung (404) bei ausreichenden Ressourcen eine Einrichtung eines Datenstroms zur ausgewählten Server-Einrichtung (420) sowie einen Abbau des zuvor eingerichteten Datenstroms veranlasst und die Migration der jeweiligen Ablaufsteuerungskomponente zur ausgewählten Server-Einrichtung freigibt.

2. Verfahren nach Anspruch 1,
bei dem die durch die weiterleitenden Kommunikationsgeräte bereitzustellenden Ressourcen nutzbare Übertragungszeitfenster, Bandbreite, zugesicherte maximale Latenz, Queue-Anzahl, Queue-Cache und/oder Adress-Cache in Switches oder Bridges umfassen.

3. Verfahren nach einem der Ansprüche 1 oder 2,
bei dem die weiterleitenden Kommunikationsgeräte über ein Time-sensitive Network, insbesondere entsprechend IEEE 802.1Q, IEEE 802.1AB, IEEE 802.1AS, IEEE 802.1BA und/oder IEEE 802.1CB, miteinander verbunden sind.

4. Verfahren nach Anspruch 3,
bei dem eine Weiterleitung der ausgewählten Datagramme mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper und/oder Priority-Based Shaper gesteuert wird.

5. Verfahren nach einem der Ansprüche 1 bis 4,
bei dem die Datenströme auf Reservierungsanfragen jeweils bidirektional eingerichtet werden und bei dem die Endgeräte Kommunikations- und/oder Automatisierungsgeräte sind.

6. Verfahren nach einem der Ansprüche 1 bis 5,
bei dem die Server-Einrichtungen und/oder die Endgeräte für eine Reservierungsanfrage jeweils einen Datenstrom-Identifikator spezifizieren und bei dem bei ausreichenden Ressourcen jeweils eine dem spezifizierten Datenstrom-Identifikator zugeordnete Multicast-Adresse an eine jeweilige Server-Einrichtung und/oder an ein jeweiliges Endgerät übermittelt wird.

7. Verfahren nach Anspruch 6,
bei dem die Server-Einrichtungen und/oder die Endgeräte die Dienstgüteparameter für die Datenströme jeweils mittels einer Talker Advertise-Nachricht spezifizieren und bei dem die Server-Einrichtungen und/oder die Endgeräte die Datenstrom-Identifikatoren jeweils mittels einer Listener Ready-Nachricht spezifizieren.

8. Verfahren nach einem der Ansprüche 6 oder 7,
bei dem den Server-Einrichtungen jeweils eine Talker- und/oder Listener-Funktion zugeordnet ist.

9. Verfahren nach einem der Ansprüche 6 bis 8,
bei dem die Reservierungsanfragen entsprechend IEEE 802.1Qcc behandelt werden.

10. Verfahren nach einem der Ansprüche 1 bis 9,
bei dem die Pfade für die Datenströme mittels Shortest Path Bridging entsprechend IEEE 802.1aq ermittelt werden.

11. Verfahren nach einem der Ansprüche 1 bis 10,
bei dem die weiterleitenden Kommunikationsgeräte zur Pfadermittlung untereinander Topologieinformationen, insbesondere entsprechend IS-IS-Protokoll, austauschen.

12. Verfahren nach einem der Ansprüche 1 bis 11,
bei dem die Ablaufsteuerungsumgebungen jeweils mittels eines auf einer Server-Einrichtung installierten Hypervisors gebildet werden, bei dem eine Migration einer Ablaufsteuerungskomponente einer Steuerungsanwendung jeweils durch eine Load-Balancing-Einrichtung initiiert wird und bei dem die Pfade für die Datenströme insbesondere virtuelle Switches umfassen.

13. Verfahren nach einem der Ansprüche 1 bis 12,
bei dem die Koordinierungseinrichtung im Rahmen einer Migration die Einrichtung des Datenstroms sowie den Abbau des zuvor eingerichteten Datenstroms zur ausgewählten Server-Einrichtung bei ausreichenden Ressourcen selbst vornimmt.

14. Verfahren nach einem der Ansprüche 1 bis 12,
bei dem die Koordinierungseinrichtung im Rahmen einer Migration die jeweilige Steuerungsanwendung bei ausreichenden Ressourcen entsprechend benachrichtigt und bei dem die jeweilige Steuerungsanwendung die Einrichtung des Datenstroms zur ausgewählten Server-Einrichtung sowie den Abbau des zuvor eingerichteten Datenstroms vornimmt.

15. Koordinierungseinrichtung zur Durchführung eines Verfahrens nach einem der Ansprüche 1 bis 14, wobei die Koordinierungseinrichtung dazu ausgestaltet und eingerichtet ist,
- vor einer Migration einer Ablaufsteuerungskomponente einer Steuerungsanwendung auf eine jeweils ausgewählte Server-Einrichtung zu überprüfen, ob für die jeweilige Steuerungsanwendung zuvor ein Datenstrom zur Übermittlung von Anwendungsdaten eingerichtet ist,
- die Migration der jeweiligen Ablaufsteuerungskomponente freizugeben, falls kein Datenstrom eingerichtet ist,
- bei einem zuvor eingerichteten Datenstrom zu überprüfen, ob für Pfade zur ausgewählten Server-Einrichtung ausreichende Ressourcen zur Datenübermittlung unter Einhaltung zuvor spezifizierter Dienstgüteparameter verfügbar sind,
- die Migration der jeweiligen Ablaufsteuerungskomponente zu unterbinden, falls keine ausreichenden Ressourcen verfügbar sind,
- bei ausreichenden Ressourcen eine Einrichtung eines Datenstroms zur ausgewählten Server-Einrichtung sowie einen Abbau des zuvor eingerichteten Datenstroms zu veranlassen und die Migration der jeweiligen Ablaufsteuerungskomponente zur ausgewählten Server-Einrichtung freizugeben.

## Claims

1. Method for providing control applications via a communication network for transmitting time-critical data, in which
- the control applications are provided by server devices (410-411, 420-421) via the communication network for use on terminals (201-205),
- the control applications are in each case provided by means of flow control components that are loadable into and executable in flow control environments formed by means of the server devices (410-411, 420-421), the flow control components being migratable to different server devices in each case for execution therein,
- selected datagrams (300) are assigned to data streams and transmitted between the server devices (410-411, 420-421) and the terminals (201-205) via paths of the communication network that comprise at least the server devices and the terminals,
- the server devices (410-411, 420-421) and/or the terminals (201-205) specify quality of service parameters for the data streams in order to reserve resources that need to be provided by forwarding communication devices (100) along the paths for a transmission of the data streams,
- in the event of a reservation request, the forwarding communication devices (100) and/or a superordinate communication control device in each case check/checks whether sufficient resources for data transmission while maintaining the specified quality of service parameters are available in the respective forwarding communication device,
- if there are sufficient resources along the paths, the forwarding communication devices (100) are in each case configured to provide resources for the data streams,
- before a flow control component of a control application is migrated to a respectively selected server device (420), a coordination device (404) checks whether a data stream for transmitting application data has previously been set up for the respective control application,
- the coordination device (404) approves the migration of the respective flow control component if a data stream has not been set up,
- if a data stream has previously been set up, the coordination device (404) checks whether sufficient resources for data transmission while maintaining the specified quality of service parameters are available for paths to the selected server device (420),
- the coordination device (404) prevents the migration of the respective flow control component if sufficient resources are not available,
- if there are sufficient resources, the coordination device (404) prompts setup of a data stream to the selected server device (420) and clearance of the previously set-up data stream and approves the migration of the respective flow control component to the selected server device.

2. Method according to Claim 1,
in which the resources to be provided by the forwarding communication devices comprise usable transfer time windows, bandwidth, assured maximum latency, number of queues, queue cache and/or address cache in switches or bridges.

3. Method according to either of Claims 1 and 2,
in which the forwarding communication devices are connected to one another via a time-sensitive network, in particular in accordance with IEEE 802.1Q, IEEE 802.1AB, IEEE 802.1AS, IEEE 802.1BA and/or IEEE 802.1CB.

4. Method according to Claim 3,
in which a forwarding of the selected datagrams is controlled by means of frame pre-emption, in particular in accordance with IEEE 802.1Qbu, time-aware shapers, in particular in accordance with IEEE 802.1Qbv, credit-based shapers, in particular in accordance with IEEE 802.1Qav, burst limiting shapers, peristaltic shapers and/or priority-based shapers.

5. Method according to one of Claims 1 to 4,
in which reservation requests result in the data streams being in each case set up bidirectionally and in which the terminals are communication and/or automation devices.

6. Method according to one of Claims 1 to 5,
in which the server devices and/or the terminals in each case specify a data stream identifier for a reservation request and in which, if there are sufficient resources, a multicast address allocated to the specified data stream identifier is in each case transmitted to a respective server device and/or to a respective terminal.

7. Method according to Claim 6,
in which the server devices and/or the terminals in each case specify the quality of service parameters for the data streams by means of a talker advertise message and in which the server devices and/or the terminals in each case specify the data stream identifiers by means of a listener ready message.

8. Method according to either of Claims 6 and 7,
in which the server devices in each case have an assigned talker and/or listener function.

9. Method according to one of Claims 6 to 8,
in which the reservation requests are handled in accordance with IEEE 802.1Qcc.

10. Method according to one of Claims 1 to 9,
in which the paths for the data streams are ascertained by means of shortest path bridging in accordance with IEEE 802.1aq.

11. Method according to one of Claims 1 to 10,
in which the forwarding communication devices exchange topology information among one another, in particular in accordance with the IS-IS protocol, for the purpose of ascertaining paths.

12. Method according to one of Claims 1 to 11,
in which the flow control environments are in each case formed by means of a hypervisor installed on a server device, in which a migration of a flow control component of a control application is in each case initiated by a load balancing device, and in which the paths for the data streams in particular comprise virtual switches.

13. Method according to one of Claims 1 to 12,
in which for the purposes of a migration the coordination device itself performs the setup of the data stream and the clearance of the previously set-up data stream to the selected server device, if there are sufficient resources.

14. Method according to one of Claims 1 to 12,
in which for the purposes of a migration the coordination device notifies the respective control application accordingly if there are sufficient resources and in which the respective control application performs the setup of the data stream to the selected server device and the clearance of the previously set-up data stream.

15. Coordination device for carrying out a method according to one of Claims 1 to 14, wherein the coordination device is designed and set up
- to check, before a flow control component of a control application is migrated to a respectively selected server device, whether a data stream for transmitting application data has previously been set up for the respective control application,
- to approve the migration of the respective flow control component if a data stream has not been set up,
- if a data stream has previously been set up, to check whether sufficient resources for data transmission while maintaining previously specified quality of service parameters are available for paths to the selected server device,
- to prevent the migration of the respective flow control component if sufficient resources are not available,
- if there are sufficient resources, to prompt setup of a data stream to the selected server device and clearance of the previously set-up data stream and to approve the migration of the respective flow control component to the selected server device.

## Revendications

1. Procédé pour disposer d'applications de commande par l'intermédiaire d'un réseau de communication, pour la transmission de données critiques temporellement, dans lequel
- on dispose des applications de commande par des dispositifs (410-411, 420-421) serveurs, par l'intermédiaire du réseau de communication en vue de les utiliser sur des terminaux (201-205),
- on dispose des applications de commande respectivement au moyen de composants de commande de déroulement, qui peuvent être chargés dans des environnements de commande de déroulement formés au moyen des dispositifs (410-411, 420-421) serveurs et y être réalisés, dans lequel les composants de commande de déroulement peuvent migrer sur d'autres dispositifs serveurs respectifs pour y être réalisés,
- on affecte des datagrammes (300) sélectionnés à des flux de données et on les transmet entre les dispositifs (410-411, 420-421) serveurs et des terminaux (201-205) par au moins les dispositifs serveurs et des chemins, comprenant les terminaux, du réseau de communication,
- les dispositifs (410-411, 420-421) serveurs et/ou les terminaux (201-205) spécifient des paramètres de qualité de service pour les flux de courant en vue de la réservation de ressources, qui sont mises à disposition par d'autres appareils (100) de communication d'acheminement le long des chemins pour une transmission des flux de données,
- les appareils (100) de communication d'acheminement et/ou un dispositif de commande de communication supérieur hiérarchiquement contrôlent respectivement, lors d'une demande de réservation si, dans l'appareil de communication d'acheminement respectif, suffisamment de ressources sont disponibles pour la transmission de données en conservant les paramètres de qualité de service spécifiés,
- on configure les appareils (100) de communication d'acheminement, si les ressources sont suffisantes le long des chemins, respectivement pour disposer de ressources pour les flux de données,
- un dispositif (404) de coordination contrôle, avant une migration d'un composant de commande de déroulement d'une application de commande à un dispositif (420) serveur sélectionné respectif si, pour l'application de commande respective, auparavant un flux de données, est conçu pour la transmission de données d'application,
- le dispositif (404) de coordination valide la migration du composant respectif de commande de déroulement, si un flux de données n'est pas conçu,
- le dispositif (404) de coordination contrôle, pour un flux de données conçu auparavant si, pour des chemins menant au dispositif (420) serveur sélectionné, sont disponibles des ressources suffisantes pour la transmission de données en observant les paramètres de qualité de service spécifiés,
- le dispositif (404) de coordination arrête le composant respectif de commande de déroulement, si des ressources suffisantes ne sont pas disponibles,
- le dispositif (404) de coordination provoque, s'il y a des ressources suffisantes, un établissement d'un flux de données vers le dispositif (420) serveur sélectionné, ainsi qu'une suppression du flux de données établi précédemment et valide la migration du composant respectif de commande de déroulement vers le dispositif serveur sélectionné.

2. Procédé suivant la revendication 1,
dans lequel les ressources à mettre à disposition par les appareils de communication d'acheminement comprennent des fenêtres temporelles utiles de transmission, une latence maximum sécurisée, un nombre de files d'attente, un cache de file d'attente et/ou un cache d'adresse, dans des switches ou des bridges.

3. Procédé suivant l'une des revendications 1 ou 2,
dans lequel les appareils de communication d'acheminement sont reliés entre eux par un réseau sensible au temps, notamment conformément à IEEE 802.1Q, IEEE 802.1AB, IEEE 802.1AS, IEEE 802.1BA et/ou IEEE 802.1CB.

4. Procédé suivant la revendication 3,
dans lequel on commande un acheminement des datagrammes sélectionnés, au moyen d'une préemption de trame, notamment suivant IEEE 802.1Qbu, un time-aware shaper, notamment suivant IEEE 802.1Qbv, un credit-based shaper, notamment suivant IBEEE 802.1Qav, un burst limiting shaper, un peristaltic shaper et/ou un priority-based shaper.

5. Procédé suivant l'une des revendications 1 à 4,
dans lequel on établit les flux de données sur des demandes de réservation respectivement bidirectionnellement, et dans lequel les terminaux sont des appareils de communication et/ou d'automatisation.

6. Procédé suivant l'une des revendications 1 à 5,
dans lequel les dispositifs serveurs et/ou les terminaux spécifient pour une demande de réservation respectivement un identifiant de flux de données, et dans lequel, si les ressources sont suffisantes, on transmet respectivement une adresse multicast affectée à l'identifiant spécifié de flux de données à un dispositif serveur respectif et/ou à un terminal respectif.

7. Procédé suivant la revendication 6,
dans lequel les dispositifs serveur et/ou les terminaux spécifient les paramètres de qualité de service pour les flux de données respectivement au moyen d'un message talker advertise, et dans lequel les dispositifs serveurs et/ou les terminaux spécifient les identifiants de flux de données respectivement au moyen d'un message listener ready.

8. Procédé suivant l'une des revendications 6 ou 7,
dans lequel une fonction talker et/ou une fonction listener est affectée respectivement aux dispositifs serveurs.

9. Procédé suivant l'une des revendications 6 à 8,
dans lequel on traite les demandes de réservation conformément à IEEE 802.1Qcc.

10. Procédé suivant l'une des revendication 1 à 9,
dans lequel on détermine les chemins pour des flux de données au moyen de shortest briding correspondant à IEEE 802.1aq.

11. Procédé suivant l'une des revendications 1 à 10,
dans lequel les appareils de communication d'acheminement échangent entre eux pour la détermination du chemin des informations de topologie, notamment suivant le protocole IS-IS.

12. Procédé suivant l'une des revendications 1 à 11,
dans lequel on forme les environnements de commande de déroulement respectivement au moyen d'un hyperviseur installé sur un dispositif serveur, dans lequel on lance une migration d'un composant de commande de déroulement d'une application de commande respectivement par un dispositif load balancing, et dans lequel les chemins pour les flux de données comprennent notamment des switches virtuels.

13. Procédé suivant l'une des revendications 1 à 12,
dans lequel le dispositif de coordination effectue lui-même, si des ressources sont suffisantes, dans le cadre d'une migration, l'établissement du flux de données, ainsi que la suppression du flux de données établi auparavant vers le dispositif serveur sélectionné.

14. Procédé suivant l'une des revendications 1 à 12,
dans lequel le dispositif de coordination avise, dans le cadre d'une migration, l'application de commande respective, si des ressources sont suffisantes, et dans lequel l'application de commande respectif effectue l'établissement du flux de données vers le dispositif serveur sélectionné, ainsi que la suppression du flux de données établi auparavant.

15. Dispositif de coordination pour effectuer un procédé suivant l'une des revendications 1 à 14, le dispositif de coordination étant conformé et conçu pour,
- avant une migration d'un composant de commande de déroulement d'une application de commande vers un dispositif serveur respectif sélectionné, contrôler si, pour l'application de commande respectif, un flux de données est établi auparavant pour la transmission de données d'application,
- valider la migration des composants respectifs de commande de déroulement, si un flux de données n'est pas établi,
- si un flux de données est établi auparavant, contrôler si sont disponibles des ressources suffisantes pour la transmission de données en observant des paramètres de qualité de service spécifiés auparavant pour des chemins vers les dispositifs serveurs sélectionnés,
- arrêter la migration des composants de commande de déroulement respectifs, si des ressources suffisantes ne sont pas disponibles,
- si les ressources sont suffisantes, provoquer un établissement d'un flux de données vers le dispositif serveur sélectionné, ainsi qu'un arrêt du flux de données établi auparavant, et valider la migration des composants de commande de déroulement respectifs vers le dispositif serveur sélectionné.
